# FASCICULE DE BREVET EUROPEEN

(11) **EP 1 861 283 B1**
(45) Date de publication et mention de la délivrance du brevet: **28.10.2009**
(21) Numéro de dépôt: 06726116.4
(22) Date de dépôt: 21.03.2006
(51) Int. Cl.: B60Q 1/00

(54) **TRAVERSE SUPERIEURE POUR BLOC AVANT DE VEHICULE AUTOMOBILE**
OBERER QUERTRÄGER FÜR KRAFTFAHRZEUGFRONTEINHEIT
UPPER CROSS-MEMBER FOR MOTOR VEHICLE FRONT UNIT

(30) Priorité: 23.03.2005 FR 0502903
(43) Date de publication de la demande: 05.12.2007
(73) Titulaire: Compagnie Plastic Omnium, 69007 Lyon (FR)
(72) Inventeur: FAYT, Arnold, F-01640 Jujurieux (FR)
(74) Mandataire: Remy, Vincent Noel Paul
(86) Numéro de dépôt international: PCT/FR2006/000618
(87) Numéro de publication internationale: WO 2006/100379

(56) Documents cités:
- US-A1- 2004 080 183
- US-A1- 2005 035 609
- US-A1- 2005 040 672

## Description

La présente invention concerne une traverse supérieure pour bloc avant de véhicule automobile.

On s'intéresse au problème du positionnement d'un bouclier de pare-chocs par rapport aux autres pièces de carrosserie voisines, en particulier le capot du véhicule.

Pour des raisons esthétiques, il est souhaitable, pour un bon positionnement, que le jeu entre la plage supérieure du bouclier et le nez du capot soit convenable, et que ces deux pièces arrivent à affleurement.

On connaît déjà dans l'état de la technique, notamment dans US 6 357 821, une plage supérieure de bouclier fixée à une traverse rigide. Une telle traverse, grâce à sa rigidité, peut assurer un positionnement précis de la plage supérieure du bouclier dans la direction verticale (Z) du véhicule.

On connaît également de US 3926463 une traverse comportant une partie rigide et une partie déformable formant un absorbeur.

La rigidité de la traverse présente cependant un inconvénient. En effet, au moment du positionnement du bouclier sur le véhicule, la position des parties latérales du bouclier est souvent imposée par la position des ailes et des blocs optiques du véhicule. Par conséquent, en raison des tolérances de fabrication, il peut être nécessaire de déplacer ou de déformer légèrement, dans les directions transversales (Y) ou longitudinales (X) du véhicule, le bouclier par rapport à la traverse rigide. Cet ajustement peut créer des contraintes locales au niveau des points de fixation de la plage supérieure du bouclier à la traverse rigide, ce qui cause des déformations visibles du bouclier.

Le problème consiste donc à positionner précisément, lors de la fixation de tout le bouclier sur le véhicule, la plage supérieure du bouclier par rapport au capot, sans pour autant que les déformations du bouclier induites par son positionnement ne soient trop visibles.

La présente invention vise à fournir une traverse permettant le positionnement de la plage supérieure d'un bouclier, cette traverse acceptant l'ajustement du bouclier sans créer de déformations trop visibles de ce dernier et permettant son positionnement précis par rapport au capot.

A cet effet, l'invention concerne une traverse supérieure pour bloc avant de véhicule automobile, ledit bloc comportant un bouclier et un capot, la traverse comprenant une partie rigide munie de moyens pour sa fixation à la structure du véhicule, **caractérisée en ce qu**'elle comporte une partie déformable apte à positionner de façon continue la plage supérieure du bouclier le long du capot, agencée pour qu'en cas de déformation imposée au bouclier, ladite partie déformable accompagne la plage supérieure en répartissant, le long de la traverse, les déplacements de la plage supérieure dans la direction longitudinale (X) du véhicule.

La traverse comporte en outre des moyens de liaison de ces deux parties, ces moyens de liaison positionnant la partie déformable par rapport à la partie rigide dans la direction verticale (Z) du véhicule, mais laissant un degré de liberté à la partie déformable dans la direction longitudinale (X).

Ainsi, la traverse sur laquelle est fixée la plage supérieure du bouclier comporte une partie rigide, éventuellement apte à positionner précisément le bouclier dans la direction verticale par rapport au nez du capot, sans présenter les inconvénients de cette rigidité. En effet, lors d'un ajustement de la position de la plage supérieure imposé par le positionnement des parties latérales du bouclier, la partie déformable, grâce à sa souplesse, accompagne les petits déplacements et déformations de la plage supérieure. Ainsi, la partie déformable répartit les contraintes le long de la traverse, de façon à éviter des contraintes ponctuelles importantes, et donc des déformations trop visibles du bouclier, que l'on obtiendrait si cette partie était rigide.

De préférence, la partie rigide est apte à exercer des fonctions structurelles dans le bloc avant. Ainsi, elle peut comporter des moyens de fixation d'une serrure du capot ou des butées aptes à coopérer avec le capot.

De préférence également, les moyens de liaison laissent aussi un degré de liberté à la partie déformable dans la direction transversale (Y) du véhicule. Ainsi, la partie déformable est mobile dans un plan horizontal, dont la hauteur est déterminée par la position verticale imposée à la partie déformable par les moyens de liaison.

Eventuellement, les moyens de liaison sont déformables dans les directions longitudinale (X) et transversale (Y) du véhicule. Cette possibilité de déformation constitue le degré de liberté laissé à la partie déformable dans l'une ou l'autre de ces directions.

Selon un autre mode de réalisation, les moyens de liaison comprennent un axe vertical de pivotement et/ou des moyens de translation de la partie déformable par rapport à la partie rigide.

Selon un mode de réalisation préféré de l'invention, les moyens de liaison des deux parties comprennent des blocs optiques du véhicule. Ils peuvent comporter en outre des moyens de fixation des extrémités de la partie déformable aux blocs optiques, et des moyens d'assujettissement entre la partie rigide et les blocs optiques, ces moyens d'assujettissement étant aptes à permettre le bon positionnement des blocs optiques par rapport aux pièces de carrosserie voisines.

Selon un autre mode de réalisation, la partie déformable est apte à positionner de façon continue la plage supérieure du bouclier le long du capot, grâce à plusieurs points de fixation de la plage, espacés entre eux de moins de 150 mm (millimètres). Ainsi, du fait de la distance relativement faible séparant les points de fixation, les contraintes exercées tout le long de la traverse sont moins importantes, ce qui évite des déformations trop visibles du bouclier.

Eventuellement, la partie déformable constitue un support pour tout le bouclier et au moins deux blocs optiques destinés à être fixés sur le véhicule devant une partie structurelle sur laquelle une poutre de pare-chocs est fixée, le support comprenant :
- des moyens de réception et de fixation des blocs optiques ;
- des organes de fixation du bouclier;
- des zones d'accostage pour recevoir les bords du bouclier et les mettre en référence avec les bords d'éléments de carrosserie et des blocs optiques adjacents.

En outre, un tel support peut comporter un absorbeur, par exemple un absorbeur à hauteur de la poutre de chocs pour traiter les chocs piétons appelés chocs « jambe ».

L'invention peut en outre comporter l'une ou plusieurs des caractéristiques suivantes :
- la partie rigide est réalisée en polypropylène chargé en fibres de verre ou polyamide chargé en fibres de verre ;
- la partie déformable est réalisée en polypropylène, éventuellement chargé en talc ;
- la traverse s'étend d'un bloc optique du véhicule à un bloc optique opposé ; et
- les parties rigide et déformable ont chacune sensiblement la forme d'une traverse ;
- la partie déformable est configurée de façon à traiter les chocs « hanche » ; et
- la traverse est une traverse de face avant technique.

L'invention sera mieux comprise à la lecture de la description qui va suivre, donnée uniquement à titre d'exemple et faite en se référant aux dessins dans lesquels :
- la figure 1 est une vue en perspective d'une partie d'un bloc avant comportant une traverse selon un premier mode de réalisation de l'invention ; et
- la figure 2 est une vue en perspective d'une partie d'un bloc avant comportant une traverse selon un deuxième mode de réalisation de l'invention.

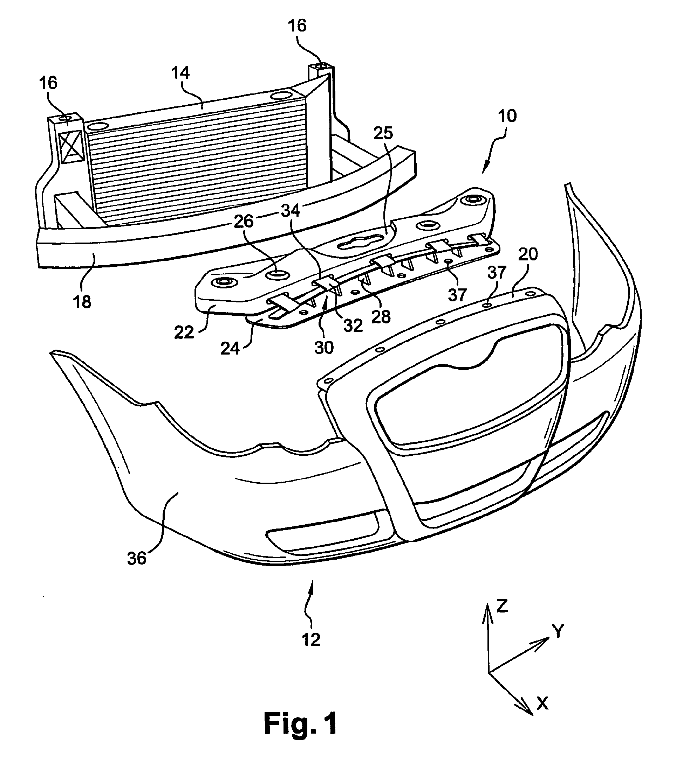

Une traverse 10 selon l'invention, visible sur la figure 1, est montée sur le bloc avant d'un véhicule, comportant notamment un bouclier 12, également appelé peau de pare-chocs, des blocs optiques (non représentés), ainsi qu'une partie structurelle comprenant un radiateur 14, deux jambages verticaux 16, et une poutre de pare-chocs 18, fixée sur les jambages 16, à hauteur des longerons du véhicule.

Le bouclier 12 comprend une plage supérieure 20 que l'on souhaite positionner convenablement par rapport au nez du capot du véhicule (non représenté).

La traverse 10 comprend une partie rigide 22 et une partie déformable 24.

La partie rigide 22 a la forme d'une traverse s'étendant d'un bloc optique à l'autre, elle est réalisée en polypropylène chargé en fibres de verres et comporte des moyens classiques pour sa fixation aux jambages 16.

La partie rigide 22 exerce une fonction structurelle sur le bloc avant du véhicule. En effet, une fois montée sur le véhicule, la partie 22 constitue, avec les jambages verticaux 16, la face avant technique du véhicule.

En outre, la partie 22 est suffisamment rigide pour comporter des moyens 24 de fixation d'une serrure de capot, ainsi que des butées capot 26.

La partie déformable 24 a également la forme d'une traverse et est en polypropylène.

Cette partie 24 est apte à recevoir la plage supérieure 20 du bouclier 12 le long du capot. Pour cela, elle comporte des points 28 de fixation de la plage 20. Les points 28 sont constitués par des nervures de serrage et sont peu espacés les uns des autres, de moins de 150 millimètres, de façon que chacun de ces points n'exerce pas une contrainte trop importante sur la plage 20 et donc sur le bouclier 12.

La partie 24 est déformable, de façon à positionner de façon continue la plage supérieure 20 le long du capot. En cas de déformation imposée au bouclier 12, la partie 24 accompagne la plage 20 en répartissant, le long de la traverse 10, les déplacements de la plage 20 dans la direction longitudinale X du véhicule.

La traverse 10 comporte en outre des moyens 30 de liaison des parties rigide 22 et déformable 2. Ces moyens 30 sont composés de languettes 32 agencées sur la partie déformable 24 et dimensionnée pour s'insérer dans des ouvertures 34 ménagées dans la partie rigide 22. Les ouvertures 34 sont plus larges que les languettes 32, de façon à permettre de petits déplacements de celles-ci dans les directions longitudinale X et transversale Y du véhicule. En revanche, les ouvertures 34 permettent un positionnement relativement précis de la partie déformable 24 dans la direction verticale Z du véhicule. Ainsi, la partie déformable 24 possède deux degrés de liberté par rapport à la partie rigide 22, de façon à être mobile, pour de petits déplacements, dans le plan défini par les directions X et Y.

Selon un autre mode de réalisation non représenté, les moyens de liaison ne sont pas constitués par les moyens 30 mais par des moyens suffisamment déformables pour permettre de petits déplacements de la partie déformable 24 dans les directions X et Y.

Lors de la fixation du bouclier 12 sur le véhicule, la plage supérieure 20 est insérée dans la partie déformable 24 de la traverse et est maintenue en place par les points de fixation 28. Pour positionner convenablement le bouclier, ses parties latérales 36 sont positionnées par rapport aux ailes et aux blocs optiques du véhicule. Il est alors possible que la partie centrale du bouclier 12, particulièrement la plage supérieure 20, soit légèrement déformée par rapport à son état au moment de l'insertion dans la partie déformable 24.

Lors de ces déformations, par sa structure, la partie déformable 24 est suffisamment souple pour accompagner la plage 20 dans ses mouvements, en répartissant les déplacements sur sa longueur. En outre, de par son positionnement vertical imposé par les moyens de liaison 30, la plage supérieure 20 conserve une hauteur convenable pour le positionnement vertical du bouclier 12 par rapport au capot du véhicule.

Une fois que tout le bouclier 12 est convenablement positionné sur le véhicule, la plage supérieure 20 est fixée de façon définitive à la partie déformable 24 à l'aide de moyens 37 classiques de fixation définitive.

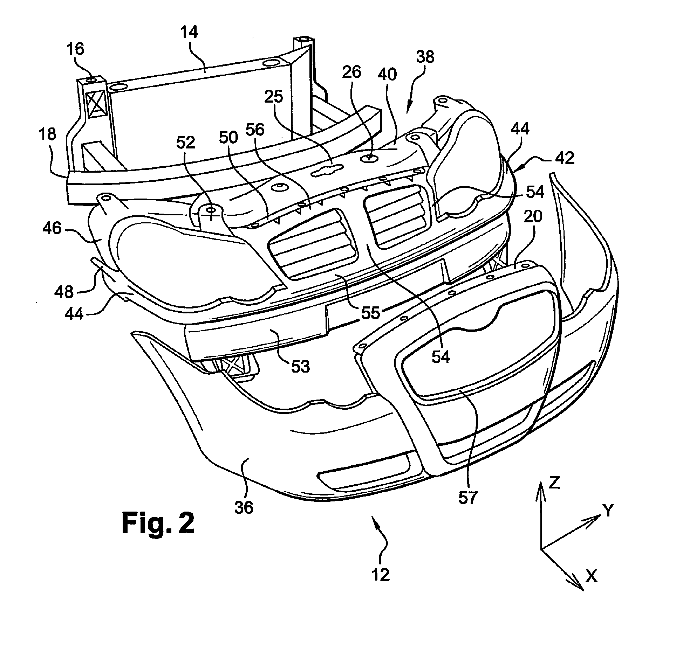

Une traverse 38 selon un autre mode de réalisation de l'invention, représentée sur la figure 2, est composée d'une partie rigide 40 et d'une partie déformable 42, constituant un support pour tout le bouclier 12.

On peut noter que, de même que pour le premier mode de réalisation, la partie rigide 40 comporte des moyens 25 de fixation d'une serrure de capot ainsi que des butées 26 aptes à coopérer avec le capot. En outre, la traverse 38 est rapportée sur les jambages verticaux 16 pour constituer ensemble la face avant technique du véhicule.

L'ensemble de la partie déformable 42 est réalisé dans un matériau souple, apte à accompagner les déformations du bouclier 12, notamment lors du positionnement de ses parties latérales 36 et de sa plage supérieure 20.

La partie déformable 42 comporte deux parties latérales 44 aptes à supporter deux blocs optiques 46. Ainsi, les parties latérales 44 du support 42 comprennent des moyens de réception et de fixation des blocs optiques 46. Les parties 44 comportent également des organes de fixation des parties latérales 36 du bouclier 12, ainsi que des zones d'accostage 48 pour recevoir ces parties 36 et les mettre en référence avec les bords du bloc optique 46 et d'une aile du véhicule.

La partie déformable 42 comporte en outre une traverse supérieure 50, s'étendant d'un bloc optique 46 à l'autre, et destinée à recevoir la plage supérieure 20. La traverse 50 a globalement la même fonction que la partie déformable 24 de la traverse de la figure 1, c'est-à-dire que, lors de déformations imposées au bouclier 12, la traverse 50 accompagne la plage supérieure 20 en répartissant les déplacements de la plage 20 dans les directions longitudinale X et transversale Y du véhicule.

Le support 42 comporte également un absorbeur de chocs 53, destiné à se trouver à hauteur de la poutre de chocs 18 lorsqu'il est en position d'utilisation sur le véhicule, de façon à traiter des chocs piéton appelés « chocs jambes ». Cet absorbeur 53 est par exemple constitué de nervures agencées en nid d'abeilles.

Le support 42 comporte en outre des montants verticaux 54, ainsi qu'une traverse intermédiaire 55, de façon à relier d'un seul tenant la traverse supérieure 50, les parties latérales 44, et l'absorbeur 53.

Selon un mode de réalisation, la traverse intermédiaire 55 comporte des organes de fixation d'une plage 57 du bouclier, située en-dessous d'une grille d'entrée d'air lorsque le bouclier est monté sur le véhicule, ainsi que des zones d'accostage de cette plage 57. Dans ce cas, la traverse 55 a la même structure que la traverse supérieure 50, de façon à accompagner les déformations de la plage 57 en répartissant ses déplacements dans directions X et Y.

A la différence de la partie 24 de la figure 1, la traverse 50 n'est pas directement reliée à la partie rigide 40. Ces deux parties 40, 50 sont reliées par l'intermédiaire des blocs optiques 46.

En outre, les moyens de liaison de la partie déformable 42 et de la partie rigide 40 comprennent les moyens de fixation des extrémités 44 aux bloc optiques 46, ainsi que des moyens 52 d'assujettissement entre la partie rigide 40 et les blocs optiques 46. Les moyens d'assujettissement 52 sont par exemple des pattes de fixation venues de matière avec les boîtiers des blocs optiques 46. Les moyens d'assujettissement 52 n'immobilisent pas de façon définitive les blocs optiques 46. En effet, ils permettent de les déplacer légèrement, de façon à les positionner convenablement par rapport aux pièces de carrosserie voisines, à savoir le bouclier 12, les ailes et le capot (non représentés). Par exemple, les moyens d'assujettissement 52 sont reliés à la partie rigide 40 par une liaison pivot d'axe vertical. Cette liaison permet de faire pivoter les blocs optiques 46 par rapport à la partie rigide 40 dans le plan X, Y, en conservant une hauteur constante.

Le positionnement du bouclier 12 sur le véhicule se fait de la façon suivante. L'ensemble constitué par la partie rigide 40, la partie déformable 42 et les deux blocs optiques 46 est rapporté sur le bloc avant du véhicule en fixant la partie rigide 40 sur le radiateur 14 ou bien sur les jambages verticaux 16, selon la longueur de cette partie 40.

On rapporte ensuite le bouclier 12 sur l'ensemble de la partie déformable 42, en insérant les parties latérales 36 du bouclier dans les zones d'accostage 48 et en insérant la plage supérieure 20 dans un logement 56 de la traverse 50, ce logement 56 comportant des points de fixation similaires aux points de fixation 28 du mode de réalisation de la figure 1. Selon un autre mode de réalisation, on insère le bouclier 12 sur la partie 24 avant de rapporter l'ensemble sur le bloc avant.

Lors de l'insertion du bouclier, la plage supérieure 20 est à une hauteur imposée le logement 56, dont la hauteur est imposée par les moyens d'assujettissement 52. En outre, la position du nez du capot est définie par la serrure de capot fixée sur la partie rigide 40 à l'aide des moyens 25. Ainsi, grâce à la partie rigide 40, la position en Z de la plage supérieure 20 et du nez du capot set convenable, c'est-à-dire que les deux pièces arrivent à affleurement et forment un jeu satisfaisant.

Une fois que le bouclier 12 est inséré dans le support 42, sur le véhicule, on procède à son positionnement précis par rapport à toutes les pièces voisines. On positionne les parties latérales 36, en les mettant en référence par rapport aux blocs optiques 46 et aux ailes, à l'aide des zones d'accostage 48.

Au cours du positionnement de ces parties 36, il est probable qu'elles se rapprochent ou s'écartent l'une de l'autre. Par conséquent, les parties centrales du bouclier 12, notamment la plage supérieure 20 et la plage intermédiaire 57, subissent de légères déformations. Lors de ces déformations, les parties déformables 50 et 55 accompagnent les plages 20 et 57, de façon à ne pas créer de déformations trop visibles sur le bouclier 12.

Comme ces parties 50 et 55 ne sont reliées à la partie rigide 40 que par l'intermédiaire des parties latérales 44, des blocs optiques 46 et des moyens d'assujettissement 52, elles peuvent se déformer relativement facilement pour accompagner le bouclier.

Ainsi, la partie déformable 42 permet de positionner convenablement, par rapport aux ailes, au capot et aux blocs optiques du véhicule, à la fois les parties latérales 36 et les parties centrales 20, 57 du bouclier 12.

On notera enfin que l'invention n'est pas limitée aux modes de réalisation précédemment décrits.

En particulier, les parties déformables (24, 42) peuvent être configurées de façon à traiter les chocs « hanche », c'est à dire qu'elles sont capables d'absorber des chocs avec la hanche d'un piéton, situés généralement au-dessus de la grille d'entrée d'air du véhicule.

## Revendications

1. Traverse supérieure (10, 38) pour bloc avant de véhicule automobile, ledit bloc comportant un bouclier (12) et un capot, la traverse comprenant une partie rigide (22, 40) unie de moyens pour sa fixation à la structure (16) du véhicule et comportant une partie déformable (24, 42) apte à positionner de façon continue la plage supérieure (20) du bouclier le long du capot, agencée pour qu'en cas de déformation imposée au bouclier (12), ladite partie déformable (24, 42) accompagne la plage supérieure (20) en répartissant, le long de la traverse (10, 38), les déplacements de la plage supérieure dans la direction longitudinale (X) du véhicule, la traverse étant **caractérisée**
**en ce qu'**elle comporte en outre des moyens (32, 34, 44, 46, 52) de liaison de ces deux parties (22, 24, 40, 42), ces moyens de liaison positionnant la partie déformable (24, 42) par rapport à la partie rigide (22, 40) dans la direction verticale (Z) du véhicule, mais laissant un degré de liberté à la partie déformable (24, 42) dans la direction longitudinale (X), les moyens de liaison (32, 34, 44, 46, 52) comprenant un axe vertical de pivotement et/ou des moyens de translation de la partie déformable (22, 42) par rapport à la partie rigide (22, 40).

2. Traverse selon la revendication 1, dans laquelle les moyens de liaison (32, 34, 44, 46, 52) laissent aussi un degré de liberté à la partie déformable dans la direction transversale (Y) du véhicule.

3. Traverse selon la revendication 1 ou 2, dans laquelle les moyens de liaison sont déformables dans les directions longitudinale (X) et transversale (Y) du véhicule.

4. Traverse selon l'une quelconque des revendications 1 à 3, dans laquelle les moyens de liaison des deux parties comprennent des blocs optiques (46) du véhicule.

5. Traverse selon la revendication 4, dans laquelle les moyens de liaison comportent en outre des moyens de fixation des extrémités (44) de la partie déformable (42) aux blocs optiques (46), et des moyens (52) d'assujettissement entre la partie rigide (40) et les blocs optiques (46), ces moyens d'assujettissement étant aptes à permettre le bon positionnement des blocs optiques par rapport aux pièces de carrosserie voisines.

6. Traverse selon l'une quelconque des revendications 1 à 5, dans laquelle la partie déformable (24, 42) est apte à positionner de façon continue la plage supérieure (20) du bouclier le long du capot, grâce à plusieurs points (28) de fixation de la plage, espacés entre eux de moins de 150 mm (millimètres).

7. Traverse selon l'une quelconque des revendications 1 à 6, dans laquelle la partie déformable (42) constitue un support pour tout le bouclier (12) et au moins deux blocs optiques (42) destinés à être fixés sur le véhicule devant une partie structurelle sur laquelle une poutre de pare-chocs (18) est fixée, le support comprenant :
- des moyens de réception et de fixation des blocs optiques (46) ;
- des organes de fixation du bouclier ;
- des zones d'accostage (48) pour recevoir les bords du bouclier et les mettre en référence avec les bords d'éléments de carrosserie et des blocs optiques adjacents.

8. Traverse selon la revendication 7, dans laquelle le support comporte en outre un absorbeur (53).

9. Traverse selon l'une quelconque des revendications 1 à 8, dans laquelle la partie rigide est apte à exercer des fonctions structurelles dans le bloc avant.

10. Traverse selon l'une quelconque des revendications 1 à 9, comportant des moyens (25) de fixation d'une serrure du capot.

11. Traverse selon l'une quelconque des revendications 1 à 10, comportant des butées (26) aptes à coopérer avec le capot.

12. Traverse selon l'une quelconque des revendications 1 à 11, dans laquelle la partie rigide (22, 40) est réalisée en polypropylène chargé en fibres de verre ou polyamide chargé en fibres de verre.

13. Traverse selon l'une quelconque des revendications 1 à 12, dans laquelle la partie déformable (24, 42) est réalisée en polypropylène, éventuellement chargé en talc.

14. Traverse selon l'une quelconque des revendications 1 à 13, s'étendant d'un bloc optique (46) du véhicule à un bloc optique opposé.

15. Traverse selon l'une quelconque des revendications 1 à 14, dans laquelle les parties rigide et déformable ont chacune sensiblement la forme d'une traverse.

16. Traverse selon l'une quelconque des revendications 1 à 15, dans laquelle la partie déformable (24, 42) est configurée de façon à traiter les chocs « hanche ».

17. Traverse de face avant technique selon l'une quelconque des revendications 1 à 16.

## Claims

1. A top crossmember (10, 38) for a motor vehicle front unit, said unit comprising a front shield (12) and a hood, the crossmember including a rigid portion (22, 40) provided with means for fastening it to the structure (16) of the vehicle and including a deformable portion (24, 42) suitable for continuously positioning the top fraction (20) of the shield along the hood and arranged such that in the event of deformation being imposed on the shield (12), said deformable portion (24, 42) accompanies the top fraction (20), spreading the movement of the top fraction in the longitudinal direction (X) of the vehicle along the crossmember (10, 38), the crossmember being **characterized in that** it further includes connection means (32, 34, 44, 46, 52) for interconnecting these two portions (22, 24, 40, 42), the connection means positioning the deformable portion (24, 42) relative to the rigid portion (22, 40) in the vertical direction (Z) of the vehicle, but leaving the deformable portion (24, 42) with a degree of freedom in the longitudinal direction (X), the connection means (32, 34, 44, 46, 52) comprising a vertical pivot pin and/or means enabling the deformable portion (22, 42) to move in translation relative to the rigid portion (22, 40).

2. A crossmember according to claim 1, wherein the connection means (32, 34, 44, 46, 52) also leave the deformable portion with a degree of freedom in the transverse direction (Y) of the vehicle.

3. A crossmember according to claim 1 or claim 2, wherein the connection means are deformable in the longitudinal and transverse directions (X, Y) of the vehicle.

4. A crossmember according to any one of claims 1 to 3, wherein the connection means for interconnecting the two portions comprise headlight units (46) of the vehicle.

5. A crossmember according to claim 4, wherein the connection means further include means for fastening the ends (44) of the deformable portion (42) to the headlight units (46), and setting means (52) between the rigid portion (40) and the headlight units (46), the setting means being suitable for enabling the headlight units to be properly positioned relative to the adjacent portions of bodywork.

6. A crossmember according to any one of claims 1 to 5, wherein the deformable portion (24, 42) is suitable for continuously positioning the top fraction (20) of the front shield along the hood by means of a plurality of traction fastener points (28) that are spaced apart from one another by less than 150 mm (millimeters).

7. A crossmember according to any one of claims 1 to 6, wherein the deformable portion (42) constitutes a support for the entire front shield (12) and for at least two headlight units (46) for fastening to the vehicle in front of a structural portion to which a bumper beam (18) is fastened, the support comprising:
• means for receiving and fastening the headlight units (46);
• front shield fastener members; and
• docking zones (48) for receiving the edges of the front shield and for positioning them relative to the edges of adjacent elements of bodywork and of the headlight units.

8. A crossmember according to claim 7, wherein the support further includes an impact absorber (53).

9. A crossmember according to any one of claims 1 to 8, wherein the rigid portion is suitable for exerting structural functions in the front unit.

10. A crossmember according to any one of claims 1 to 9, including means (25) for fastening a hood lock.

11. A crossmember according to any one of claims 1 to 10, including abutments (26) suitable for co-operating with the hood.

12. A crossmember according to any one of claims 1 to 11, wherein the rigid portion (22, 40) is made of glassfiber-filled polypropylene or of glassfiber-filled polyamide.

13. A crossmember according to any one of claims 1 to 12, wherein the deformable portion (24, 42) is made of polypropylene, possibly filled with talc.

14. A crossmember according to any one of claims 1 to 13, extending from one headlight unit (46) of the vehicle to an opposite headlight unit.

15. A crossmember according to any one of claims 1 to 14, wherein the rigid and deformable portions are each substantially in the form of a crossmember.

16. A crossmember according to any one of claims 1 to 15, wherein the deformable portion (24, 42) is configured so as to handle "hip" impacts.

17. A front panel crossmember according to any one of claims 1 to 16.

## Patentansprüche

1. Obere Traverse (10, 38) für den Frontblock eines Kraftfahrzeugs, wobei der Block einen Schutzschild (12) und eine Motorhaube aufweist, wobei die Traverse ein starres Teil (22, 40) umfasst, das mit Mitteln zu seiner Befestigung an der Struktur (16) des Fahrzeugs ausgerüstet ist und ein verformbares Teil (24, 42) aufweist, das den oberen Bereich (20) des Schutzschildes längs der Motorhaube kontinuierlich positionieren kann und so angeordnet ist, dass im Falle einer am Schutzschild (12) auftretenden Deformation das verformbare Teil (24, 42) mit dem oberen Bereich (20) mitläuft, indem es die Verschiebungen des oberen Bereiches längs der Traverse (10, 38) in Längsrichtung (X) des Fahrzeugs verteilt, wobei die Traverse **dadurch gekennzeichnet ist, dass** sie ferner Mittel (32, 34, 44, 46, 52) zum Verbinden der beiden Teile (22, 24, 40, 42) aufweist, wobei diese Verbindungsmittel das verformbare Teil (24, 42) in Bezug auf das starre Teil (22, 40) in der vertikalen Richtung (Z) des Fahrzeugs positionieren, dabei jedoch dem verformbaren Teil (24, 42) in der Längsrichtung (X) einen Freiheitsgrad lassen, wobei die Verbindungsmittel (32, 34, 44, 46, 52) eine senkrechte Schwenkachse und/oder Translationsmittel des verformbaren Teils (22, 42) in Bezug auf das starre Teil (22, 40) umfassen.

2. Traverse nach Anspruch 1, in der die Verbindungsmittel (32, 34, 44, 46, 52) dem verformbaren Teil in der Querrichtung (Y) des Fahrzeugs ebenfalls einen Freiheitsgrad lassen.

3. Traverse nach Anspruch 1 oder 2, in der die Befestigungsmittel in der Längsrichtung (X) und in der Querrichtung (Y) des Fahrzeugs verformbar sind.

4. Traverse nach einem der Ansprüche 1 bis 3, in der die Befestigungsmittel der beiden Teile Beleuchtungsmodule (46) des Fahrzeugs umfassen.

5. Traverse nach Anspruch 4, in der die Befestigungsmittel außerdem Befestigungsmittel für die äußersten Enden (44) des verformbaren Teils (42) an den Beleuchtungsmodulen (46) sowie Niederhalter-Mittel (52) zwischen dem starren Teil(40) und den Beleuchtungsmodulen (46) aufweisen, wobei durch diese Niederhalter-Mittel die korrekte Positionierung der Beleuchtungsmodule in Bezug auf die benachbarten Karosserieteile ermöglicht wird.

6. Traverse nach einem der Ansprüche 1 bis 5, in der das verformbare Teil (24, 42) in der Lage ist, den oberen Bereich (20) des Schutzschildes dank mehrerer Befestigungspunkte (28) des Bereichs kontinuierlich längs der Motorhaube zu positionieren, wobei die Befestigungspunkte voneinander mindestens einen Abstand von 150 mm (Millimeter) aufweisen.

7. Traverse nach einem der Ansprüche 1 bis 6, in der das deformierbare Teil (42) eine Halterung für den gesamten Schutzschild (12) und mindestens zwei Beleuchtungsmodule (42) darstellt, für die eine Befestigung am Fahrzeug vor einem strukturellen Teil vorgesehen ist, auf dem ein Stoßfängerträger (18) befestigt ist, wobei die Halterung Folgendes umfasst::
- Mittel zur Aufnahme und zur Befestigung der Beleuchtungsmodule (46);
- Mittel zur Befestigung des Schutzschildes;
- Anlegebereiche (48), um die Ränder des Schutzschildes aufzunehmen und sie in einen Bezug zu den Rändern von Karosserieelementen und den benachbarten Beleuchtungsmodulen zu bringen.

8. Traverse nach Anspruch 7, in der die Halterung außerdem einen Absorber (53) aufweist.

9. Traverse nach einem der Ansprüche 1 bis 8, in der das starre Teil in der Lage ist, in dem Frontblock strukturelle Funktionen auszuüben.

10. Traverse nach einem der Ansprüche 1 bis 9, die Befestigungsmittel (25) eines Schlosses der Motorhaube aufweist.

11. Traverse nach einem der Ansprüche 1 bis 10, die Anschläge (26) aufweist, welche mit der Motorhaube zusammenwirken können.

12. Traverse nach einem der Ansprüche 1 bis 11, in der das starre Teil (22, 40) aus glasfaserverstärktem Polypropylen oder aus glasfaserverstärktem Polyamid hergestellt wird.

13. Traverse nach einem der Ansprüche 1 bis 12, in der das deformierbare Teil (24, 42) aus Polypropylen hergestellt wird, das gegebenenfalls mit Talk durchsetzt ist.

14. Traverse nach einem der Ansprüche 1 bis 13, die sich von einem Beleuchtungsmodul (46) des Fahrzeugs bis zu einem gegenüber liegenden Beleuchtungsmodul erstreckt.

15. Traverse nach einem der Ansprüche 1 bis 14, in der das starre Teil und das deformierbare Teil jeweils im Wesentlichen die Form einer Traverse haben.

16. Traverse nach einem der Ansprüche 1 bis 15, in der das deformierbare Teil (24, 42) so gestaltet ist, dass es einen Aufprall "auf Hüfthöhe" auffangen kann.

17. Traverse einer technischen Vorderfront nach einem der Ansprüche 1 bis 16.
